# EUROPÄISCHE PATENTSCHRIFT

(11) **EP 1 147 057 B1**
(45) Veröffentlichungstag und Bekanntmachung des Hinweises auf die Patenterteilung: **22.09.2004**
(21) Anmeldenummer: 00901040.6
(22) Anmeldetag: 21.01.2000
(51) Int. Cl.: B65G 15/00

(54) **ENDLOSES TRANSPORTBAND MIT WERBETRÄGER**
ENDLESS CONVEYOR BELT WITH ADVERTISING MEDIUM
BANDE TRANSPORTEUSE SANS FIN COMPORTANT UN SUPPORT PUBLICITAIRE

(30) Priorität: 21.01.1999 CZ 891699
(43) Veröffentlichungstag der Anmeldung: 24.10.2001
(73) Patentinhaber: Masek, Miroslav, 301 00 Plzen (CZ); Rozsafny, Oldrich, 301 00 Plzen (CZ); Cerny, Martin, 301 00 Plzen (CZ); ZeniSek, Pavel, 301 00 Plzen (CZ); Kral, Jindrich, 301 00 Plzen (CZ); Kratochvil, Vaclav, 4600 01 Liberec (CZ)
(72) Erfinder: MAŠEK, Jaroslav;, 301 00 Plzeň (CZ)
(74) Vertreter: Fischer, Michael
(86) Internationale Anmeldenummer: PCT/CZ2000/000001
(87) Internationale Veröffentlichungsnummer: WO 2000/043297

(56) Entgegenhaltungen:
- EP-A- 0 478 866
- EP-A- 0 511 025
- US-A- 4 979 591

## Beschreibung

Die Erfindung betrifft ein endloses auf Transportwalzen wälzgelagertes Transportband mit einem Werbeträger, insbesondere für Kassen- und Ausgabepulte der Geschäfte und für bewegliche Stufen der öffentlichen Räume.

Transportbänder aus flexiblem Material, die zur Verschiebung der Ware bei Kassen- und Ausgabepulten, zum Transport von Gepäck oder Personen in den öffentlichen Räumen dienen, sind ein günstiger Ort für die Unterbringung der Werbeüberschriften und Abbildungen. Aus dem Patent DE 4128664 ist der Werbeträger bekannt, der von einem Stück des flexiblen Bandes gebildet wird, versehen auf der Wangenseite mit Werbeaufschrift oder mit Abbildung und eingesetzt in die Öffnung, die im Transportband ausgeschnitten ist. Eine solche Ausführung des Werbeträgers beschädigt anhaltend das Transportband, es ist schwierig durchführbar, kostenaufwendig und ermöglicht kein einfaches Auswechseln der Werbeaufschrift oder Abbildung. Aus dem Patent US 4979591 ist der Übertragungsdruck des Transportbandes bekannt, der die Werbeaufschrift oder Abbildung sind, der auf der Transportfläche des Transportbandes aufgetragen ist. Eine solche Ausführung ist wohl einfach, beschädigt jedoch zugleich das ständige Transportband, dessen medizinische Anstandslosigkeit strittig ist, unkontrollierter Abnutzung unterliegt und nicht einfach beseitigt werden kann und im Bedarfsfall die Werbeaufschrift oder Abbildung zu modifizieren. In der Handelsausnutzung sind weit verbreitet Selbstklebefolien auf der Wangenseite, versehen mit Werbeaufschrift oder Abbildung und auf der anderen Rückseite, versehen mit einer selbstklebenden Schicht für das Ankleben auf der flachen Fläche. Das Ankleben solcher Folien auf den Transportbändern für die Warenverschiebung, den Gepäcktransport oder Personen ist jedoch unzuverlässig und die angeführte Folie löst sich nach kurzer Nutzungszeit auch im Fall der Verwendung des individuellen Auftragens hochqualitativer Leime.

Ziel der Erfindung ist es, die Nachteile des bisherigen Standes der Technik zu beseitigen und einen Werbeträger für die nichtauslaufenden flachen flexiblen Transportbänder der Geschäfte und öffentlichen Räume sicherzustellen, die auf Transportwalzen rolllgelagert sind, der einfach und zuverlässig mit der flachen Transportoberfläche des Transportbandes verbindbar ist, dem Verschleiß nicht unterlag, den Auftrag ausdrucksvoller Werbeaufschriften und die Abbildung sowie zugleich eine einfache Beseitigung von der Transportoberfläche des Transportbandes und den Ersatz durch den Werbeträger mit einer anderen Werbeaufschrift oder Abbildung ermöglicht.

Die Nachteile des bisherigen Standes der Technik in wesentlichem Maße beseitigt und das Ziel der Erfindung erfüllt ein endloses auf Transportwalzen rollgelagertes Transportband mit einem Werbeträger insbesondere für Kassen- und Ausgabepulte der Geschäfte und für bewegliche Stufen der öffentlichen Räume, gemäß Erfindung, deren Wesen darin besteht, dass der Werbeträger von einer Folie aus einem biegsamen flexiblen Material gebildet ist, die von der Innenseite zur flachen Transportoberfläche des flexiblen Transportbandes befestigt ist, auf der Außenseite mit einem Werbemedium versehen ist und Fugen oder Öffnungen für den Ausgleich der Änderungen der Oberflächendichte der Folie bei deren Biegung um die Transportwalzen aufweist. Gemäss einer vorteilhaften Ausführung können die Fugen bzw. Öffnungen die Folie auf die Bänder und/oder Reihen aufteilen, wobei das Randband und/oder das benachbarte Innenband oder Reihe abgerundete Außenplanecken bzw. haben. Mit Vorteil können die Fugen bzw. die Öffnungen die Folie auf Bänder mit einer Breite w = 0,5 [mm] - 0,5 π d [mm] aufteilen, wobei d den Durchschnitt der Transportwalze bedeutet. Nach einer vorteilhaften Ausführung beträgt die Breite der Bänder kann mit Vorteil 5-12 [mm]. Die Tiefe der Fugen bzw. der Öffnungen der Folie kann wenigstens einem Teil ihrer Dicke gleich sein oder ihrer gesamten Dicke gleich sein. Der Halbmesser der Abrundung der Außenquerecken des Randbandes und der Außenquerecken des benachbarten Innenbandes kann kleiner sein, als die Hälfte der Breite w der Bänder, die Fugen bzw. Öffnungen können quer zur Längsachse des flexiblen Bandes angeordnet sein. Die Dicke des Werbeträgers kann mit Vortei 0,05 ö 0,45 [mm] betragen. Die Folie auf ihrer Außenseite kann vorteilhaft mit einer glasfaserverstärkten Oberflächenschutzschicht versehen sein, mit Vorteil kann die Folie mehrschichtig sein. Mit Vorteil kann die Folie zur Transportoberfläche des Transportbandes mittels selbstklebender Schicht befestigt sein, die fest mit der Innenseite der Folie verbunden sein kann.

Der Vorteil des Werbeträgers gemäß Erfindung ist die zuverlässige Verbindung mit dem Transportband, die Möglichkeit des einfachen, schnellen und preislich günstigen Auswechselns und der Ersatz durch den Werbeträger mit einem anderen Werbeträger oder Abbildung einer beliebigen Farbe und Ausführung. Ein Vorteil des Werbeträgers gemäß Erfindung ist auch die Möglichkeit der Verwendung der profilierten Oberfläche des Werbeträgers und der ausdrucksvollen Durchführung der Werbeaufschrift oder Abbildung. Ein weiterer Vorteil ist die Wahrung des unbeschädigten Transportbandes auch nach der Beseitigung des Werbeträgers. Ein Vorteil des Werbeträgers gemäß Erfindung ist endgültig auch die Wahrung der Reinheit der Oberfläche während der ganzen Zeit der Nutzung.

Die exemplarische Ausführung des Werbeträgers gemäß Erfindung ist auf den Zeichnungen abgebildet, auf denen Abbildung 1 den Querschnitt durch das endlose Transportband mit dem Werbeträger markiert, Abbildung 2 die Draufsicht auf das Transportband mit dem Werbeträger, versehen mit Querfugen, Abbildung 3 Draufsicht auf das Transportband mit dem mit Öffnungen versehenen Werbeträger, Abbildung 4 Draufsicht auf das Transportband mit dem Werbeträger unregelmäßiger Form, der mit einem Komplex schräger Fugen versehen ist, Abbildung 5 den Querschnitt durch den Werbeträger vor dem Ankleben auf das Transportband.

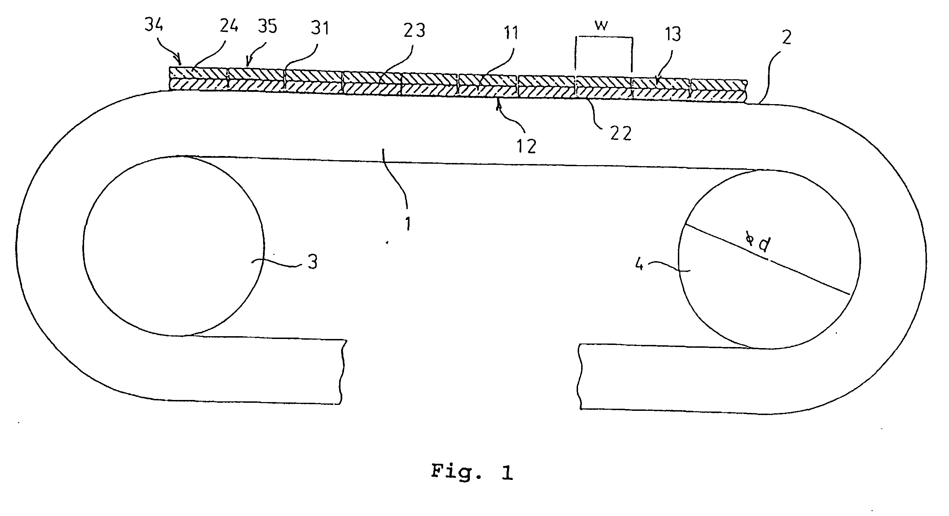

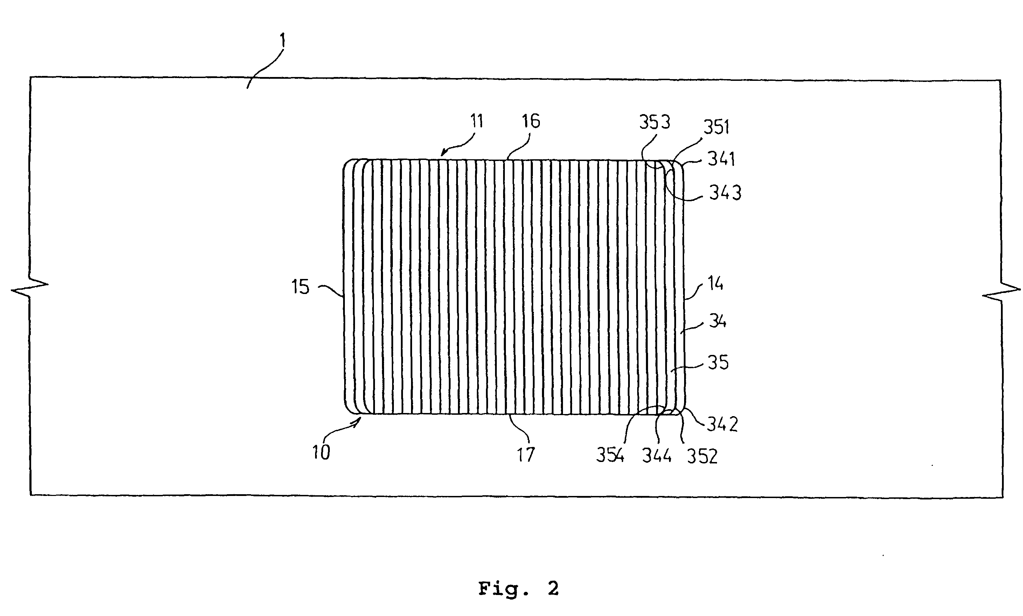

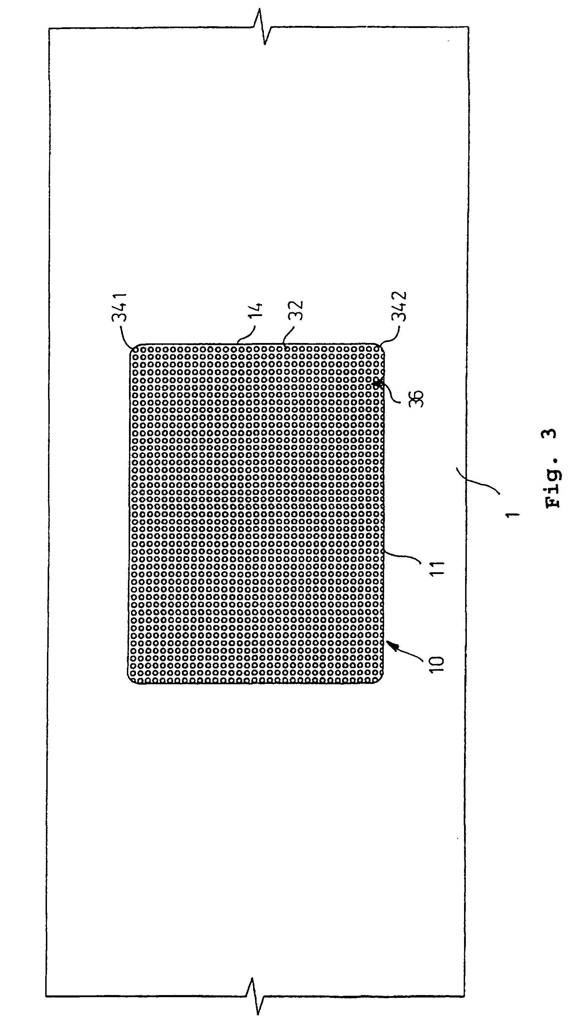

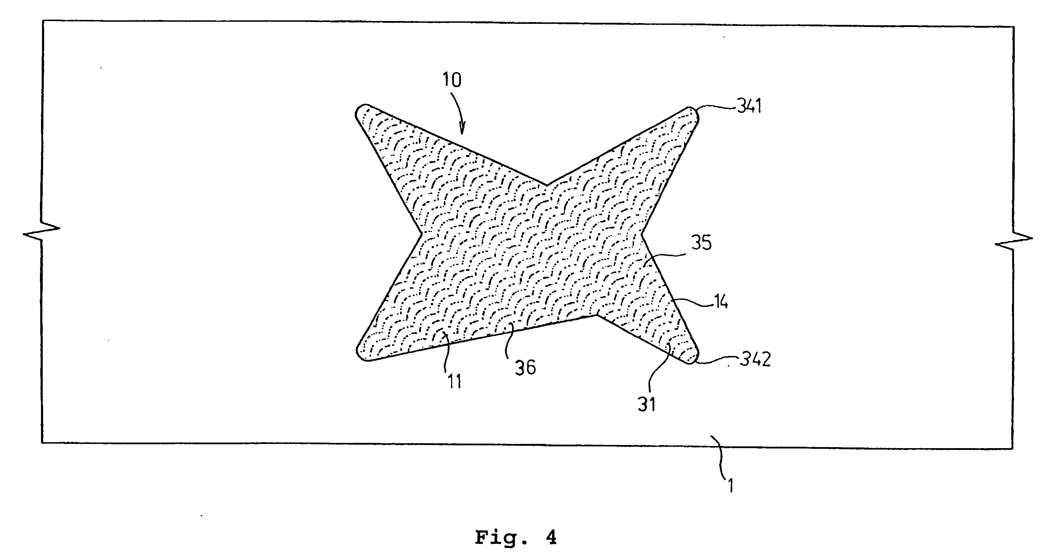

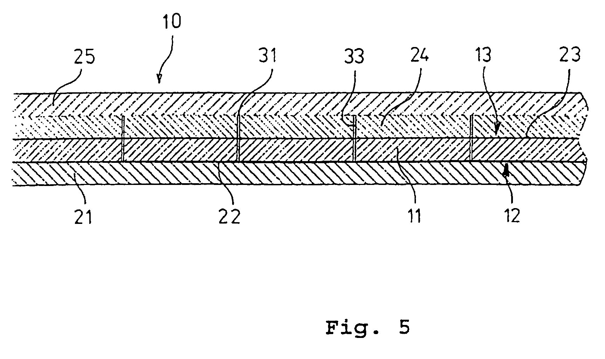

Auf Abbildung 1 ist exemplarisch ein flexibles Transportband 1 abgebildet, das auf Transportlagern 3, 4 rollgelagert ist, von denen eine mit nicht veranschaulichtem Elektromotor angetrieben wird. Der Durchmesser d des Außenumfangs der Transportwalzen pflegt in der Spanne d = 30 ö 100 mm zu sein. Der üblicherweise verwendete Durchschnitt der Transportwalze 3, 4, pflegt ca. 50 mm zu sein. Auf der flachen Transportoberfläche 2 des Transportbandes 1 ist die Folie 11 exemplarisch durch Ankleben mittels der selbstklebenden Schicht 22 befestigt, die fest verbunden ist mit der Innenseite 12 der Folie 11. Die Folie 11 kann auf der Transportoberfläche 2 des Transportbandes auch mittels anderer Mittel befestigt werden, exemplarisch mittels eines sog. trockenen Reißverschlusses. Auf der Außenseite 13 der Folie 11 ist ein Werbemedium 23 aufgetragen und die Außenseite 13 mit dem Werbemedium 23 sind durch die Schutzschicht 24 verdeckt, die exemplarisch laminiert werden kann. Das Werbemedium 23 kann exemplarisch durch Aufdruck gebildet werden, es kann auch durch das plastische Muster gebildet werden, das auf der Außenoberfläche der Folie 11 oder durch ein anderes transparentes Mittel gebildet wird. Die Folie 11 ist durch Fugen 31 auf Bändern 34, 35 über die Breite w aufgeteilt, deren Größe in der Spanne w = 0,5 [mm] ö 0,5 π d [mm] ist. Die Fugen 31 verlaufen im Prinzip quer zur Längsachse des Transportbandes 1. Wie auf den weiteren Abbildungen abgebildet ist, kann jedoch die Fuge 31 von der Senkrechte auf der Längsachse des Transportbandes 1 abgeneigt sein. Wichtig ist, daß die Anordnung der Fugen resp. der Öffnungen die Dehnung ggf. Zusammenziehung der Oberfläche der Folie 11 bei der Biegung über die Transportwalze 3, 4 ermöglichte. Bei der Bewegung des Transportbandes 1 macht die Folie 11 zum Teil eine geradlinige Bewegung, zum Teil macht die Bewegung einen Kreisbogen auf den Transportwalzen 3, 4. Gemäß Abbildung 2 wird der Werbeträger 10 von der Folie 11 mit den Planseiten 14, 15 und den Flankenseiten 16, 17 gebildet. Angesichts dessen, daß die Folie 11 gemäß Achse quer zur Längsachse des Transportbandes 1 ist, sind mit Beziehungsmarken nur Elemente der einzigen Querseite 14 markiert. In der Folie sind die Fugen 31 gebildet, die die Folien 11 in Randbänder 34 und Innenbänder 35 aufteilen. Die Randbänder 34 sind auf ihren Außenecken 341, 342 abgerundet. Ebenso wie auf ihren Außenecken 351, 352 exemplarisch abgerundet des nächstbenachbarten Innenbandes 35. Mit Vorteil können auch nichtmarkierte Ecken des weiteren benachbarten nicht markierten Innenrings abgerundet werden. Die Innenecken 343 resp. 344 des Randbandes 34 entsprechen in ihrer Form den benachbarten Außenecken 351 resp. 352 des benachbarten Innenrings 35. Es ist deshalb notwendig, daß das Werbemedium nicht erst zur Querseite 14, 15 der Folie reichte, wenn das Werbemedium nicht vom beschädigten Randband 34 gestört sein sollte. Wie oben gesagt, sind die meistbeanspruchten Stellen des Werbeträgers 10 Randbänder 34. Wenn die Randbänder 34 bedeutend deformiert sind, können sie aus dem Transportband 1 gerissen werden, ohne daß dadurch das Werbemedium 23 oder die Gesamtansicht des Werbeträgers 10 und die Ansicht des Transportbandes 1 leiden würde. Wenn die Größe der Abrundung der Außenecken 341, 342 resp. 351, 352 größer ist, als eine Hälfte der Breite des Bandes 34, 35 erhöht sich das Risiko der Ableimung der Folie 11 am Ort der Ecken, wo es zur maximalen Verengung der aufgeklebten Folie 11 kommt. Deshalb muß der Radius der Abrundung der Außenecken 341, 342 resp. 351, 352 kleiner sein, als die Hälfte der Breite der Bänder 34, 35. Die Breite w der Fuge 31 ist es notwendig in der Spanne 0,5 [mm] ö 0,5 π d [mm] zu wählen, damit es beim Betrieb nicht zu einer spontanen Ableimung der Folie 11 vom Transportband 1 kommt. Die Randwerte sind dadurch gegeben, daß sich bei der Breite w kleiner als w = 0,5 [mm] bedeutend die Unübersichtlichkeit des Werbemediums erhöht. Zugleich verkleinern sich die Klebekräfte, daß beim Wirken der Schubkraft, die beim Anprall des Materials durch Kante auf den Gegenstand der sich bewegenden Oberfläche des Bandes, es zur Defomierung und zum erhöhten Abkleben der Bänder 34, 35 der Folie 11 kommt. Bei der Breite w größer, als 0,5 π d [mm] verliert der Leim bereits seine Fähigkeit, seine Flexibilität der Dilatation des Materials bei der Biegung um die Transportwalzen 3, 4 und es kommt zur erhöhten Ableimung. Die so berechnete max. Breite der Bänder w garantiert den Ausgleich der Änderung der Oberflächendichte der Folie bei deren Biegung um die Transportwalze herum. In der günstigsten Lage des Übergangs des Werbeträgers um die Transportwalze herum ist diese mit Fugen oder Öffnungen an den Stellen versehen, die durch die maximale Breite der Bänder w gegeben sind, oder an den Stellen, wo sie aufhört durch Bewegung bei ihrem Übergang um die Transportwalzen beansprucht zu sein. Fugen oder Öffnungen ermöglichen also die Ausnutzung des Grenzwertes der Flexibilität der Folie. Wenn die Maximalbreiten der Bänder w größer sind, kommt es bei einem Teil des Bandes, das die maximale Breite des Bandes w zum Eggen dieses Teils des Bandes über die Transportoberfläche des Transportbandes oder zu einer unumkehrbaren Deformation übersteigt, die durch Abstinenz der Fugen oder der Öffnungen an den Stellen verursacht wird, wo sich die größte Änderung der Oberflächendichte der Folie äußert. Die Breite der Bänder 34, 35 ist es notwendig, auch mit Rücksicht darauf zu wählen, daß sich bei der Bewegung der Folie 11 auf den Transportwalzen 3,4 die Fugen 31 resp. 32 nicht verunreinigten. Im ebenen Stand der Folie 11 reichen die benachbarten Bänder 34, 35 zueinander. Beim Bewegen der Folie 11 auf den Transportwalzen erweitern sich die Fugen 31 bis zu der Breite, die gleich 1/33 der Breite der benachbarten Bänder ist. Die Breite der Bänder 34, 35 ist es deshalb notwendig, auch mit Rücksicht auf die Breite der Fuge 31 zu wählen, die bei der Bewegung der Folie 11 um die Transportwalzen 3, 4 entstehen und mit Rücksicht auf die Durchschnittsgröße der Staubunreinheiten in der Umgebung. Gemäß Abbildung 3 ist auf dem Transportband 1 der Werbeträger 10, der von der Folie 11 in der Form des regelmäßigen Vierecks mit der Planseite 14 und den Planecken 341, 342 gebildet sind, in denen die Öffnungen 32 heausgebildet sind, die exemplarisch in den Reihen 36 quer zur Längsachse 1 angeordnet sind. Gemäß Abbildung 4 ist auf dem Transportband 1 der Werbeträger 10 befestigt, der von der Folie 11 gebildet wird, exemplarisch in unregelmäßiger Form eines Sterns mit der Querseite 14 und Querecken 341, 342. Die Fugen 31 sind in den Reihen 36 herausgebildet, deren Form gemäß abgebildeten Beispiel nicht gerade ist, sondern wellig oder einer Wellenlinie ähnlich. Das Gebilde der so entstandenen Bänder 35 kann sehr vielfältig sein, es muß jedoch eine flächige Zusammenziehung resp. Ausdehnung der Oberflächenschicht der Folie 11 bei der Biegung um die nicht abgebildeten Transportwalzen ermöglichen. Auf Abbildung 5 ist selbständig der Werbeträger 10 abgebildet, der auf die Art und Weise seiner Produktion beleuchtet werden konnte. Zur Innenseite 12 der Folie 11 ist die selbstklebende Schicht 22 angeklebt, für die Zwecke des Transports und Behandlung vor Verwendung durch Unterlagenpapier 21. Auf der Außenseite 13 der Folie 11 ist das Werbemedium 23 aufgetragen, abgedeckt durch Schutzschicht 24, die exemplarisch beschichtet werden kann. Die Folie 11 mit dem Werbemedium 23 und die Schutzschicht 24 sind mit Fugen 31 auf den nicht markierten Bändern aufgeteilt. Die Tiefe der Fugen 31 ist gemäß exemplarischer Ausführung der ganzen Stärke der Folie 11 einschließlich der Schutzschicht 24 gleich, er kann jedoch nur in den Teil der Dicke der Folie 11 eingegriffen werden. Auf der Schutzschicht 24 ist dann eine kleine Klebkraft der Übertragungsfolie 25 angeklebt. Die Übertragungsfolie 25 dient zur Übergangsbefestigung der Bänder 34, 35 der Folie 11 danach, wenn sich vor dem Aufkleben auf dem Transportband 1 das Unterlagenpapier 21 von der Selbstklebeschicht 22 ablöst. Vom Werbeträger 10 wird gefordert, daß er wenigstens während der Zeit von einem Monat auf der Oberfläche des Unterlagen-, Ausgaben- oder Transportbandes ohne ausdrucksvollere Beschädigung aushält. Zur Erreichung dieses Ziels ist es notwendig, folgende Produktionsmethode einzuhalten: In den Werbeträger 10, der mit der Übertragungsfolie 25 versehen ist, werden die Fugen 31 resp. die nicht abgebildeten Öffnungen 32 ausgesägt. Für die Herausbildung der Fugen 31 resp. der Öffnungen 32 ist es nicht günstig, die Ausklinkpresse zu verwenden, das das Material senkrecht zu seiner Oberfläche schneidet, denn es entstehen wesentliche Mängel an den Schnittwänden 33. Die Abdrückgummiblöcke, die aus Produktionsgründen vor dem Aushauen nicht zwischen dem Aushaumesser entlang der ganzen Länge der Schnittwände 33 untergebracht werden können, sind die Ursache der Abweichungen in der Ebene des Schnitts. In den Orten, wo der Werbeträger 10 zur Unterlage aufgespannt ist, entsteht bei Schlag der Messer durch den Einfluß der örtlichen Einspannens ein nicht gleichartiges Wirken der Kraft des nicht eindringenden Messers in das Material, die sehbare Ungleichheiten und Unregelmäßigkeiten auf der Schnittfläche auch in deren Nähe herausbilden. Im Augenblick, in dem das Auschnittmesser nach der Beendigung des Einkerbens bei der Rückbewegung das beschnittene Material verläßt, abgehoben vom Unterlagenpapier 21 in der Länge von ca. 0,5 mm von der Schnittwand 33 und es zugleich von sich die Folie 11 und die Schutzschicht 24 über die Länge von ca. 0,3 mm von der Schnittwand 33 abtrennt. Diese technologischen Mängel sind nach dem Aufkleben des Werbeträgers 10 auf dem Transportband die Ursache der schrittweisen Eintragung der getrennten Schichten durch Unreinheiten und es kommt zu deren schrittweiser Abklebung. Deshalb ist es notwendig, die Fugen 31 resp. Öffnung 32 in der Richtung angenähert zu schneiden, gleichlaufend mit der Oberfläche des Werbeträgers 10. Das Schneiden kann durch Schnittzaun oder manuell durch Skalpell durchgeführt werden, für die Serienproduktion eignet sich jedoch besser das Schneiden mit Ploter. Es ist dabei notwendig, das Prinzip einzuhalten, daß Messer muß in jeder Fuge 31 erstmalig außerhalb der Fläche des Werbemediums 23 anfahren, denn im Gebiet der ersten Einrichtung in das Material entstehen sichtbare Deformationen, die die Abbildung oder die Aufschrift des Werbemediums 23 verzerren. Nach dem Ausschneiden der Fugen 31 resp. der Öffnungen 32 klebt an der Folie 11 oder an ihrer Schutzschicht 24 mit kleiner Klebkraft die Übertragungsfolie 25, die dazu dient, daß von sich getrennte Bänder 34, 35 nach der Beseitigung des Unterlagenpapiers 21 nicht zerfallen sind, sondern ihre Lage und das Antlitz wahren. Bei der Verwendung des Werbeträgers 10 wäre es möglich, den Leim individuell vor der Beilage des Werbeträgers 10 für die Transportoberfläche des nicht abgebildeten Transportbandes aufzutragen, eine solche Art und Weise erlaubte jedoch die Serienverwendung, bei der es notwendig ist, im Laufe von maximal einer Stunde Werbeträger auf Dutzende Transportbänder aufzukleben. Deshalb ist es notwendig, den Werbeträger 10 für das Transportband mittels selbstklebender Schicht 22 aufzukleben. Die selbstklebende Schicht 22 kann auf das Transportband auf trockenem oder nassem Wege aufgeklebt werden. Beim Aufkleben auf trockenem Weg ist das Problem, die Luftblasen zwischen dem Transportband und der selbstklebenden Schicht 22 zu beseitigen. Dieses Problem entsteht praktsich nicht bei der Breite der Bänder 34, 35 breiter als w = 30 [mm], denn die Luftblasen sind in Fugen ausgedrückt. Der blaue Weg, bei dem es einfacher ist, die Luftblasen herauszudrücken, jedoch den sofortigen Einsatz des Werbeträgers in den Betrieb nicht ermöglicht, denn die ausreichende Klebrigkeit äußert sich erst nach dem Austrocknen der Unterstützungsflüssigkeit. Auch dann jedoch die fremdartigen Stoffe, die in dieser Flüssigkeit enthalten sind, senken nach ihrem Austrocknen die Haftfestigkeit des Klebstoffs. Mit Rücksicht auf diese Einflüsse sind die Grenzen der Verwendbarkeit des Werbeträgers 10 die Grenze w = 0,5 [mm] ö 0,5 π d [mm], wobei sich die Grenze w = 5 ö 12 [mm] für die praktische Verwendung als günstiger zeigte. Womit ist die stärkere Schicht oder Summe der Schichten, die der Werbeträger 10 bildet, dadurch ist die Stoßkante dieses Materials zu Deformierungen beim Stoß mit einem Gegenstand, der sich entgegen bewegt. Die Dicke des Werbeträgers zeigte sich in der Spanne 0,05 - 0,45 mm. Bei Kassen- oder Ausgabesystemen, die nicht mit Fotozelle oder mit einem anderen Mechanismus ausgestattet sind, der die Bewegung des Transportbandes der Anpassung des Gegenstandes zum Ort seiner Bewegung einstellt, ist in der Regel, daß die Grenze zwischen dem Transportband und dem Deckblech, unter dem das Transportband läuft, nicht größer als 0,5 mm aus Sicherheitsgründen sein darf.

## Patentansprüche

1. Endloses Transportband mit einem Werbeträger, insbesondere für Kassen- und Ausgabepulte der Geschäfte und für bewegliche Stufen der öffentlichen Räume, wälzgelagert auf Transportwalzen,
**dadurch gekennzeichnet, daß**
der Werbeträger (10) von einer Folie (11) aus einem biegsamen flexiblen Material gebildet ist, die von der Innenseite (12) zur flachen Transportoberfläche (2) des flexiblen Transportbandes (1) befestigt ist, auf der Außenseite (13) mit einem Werbemedium (23) versehen ist und Fugen (31) oder Öffnungen (32) für den Ausgleich der Änderungen der Oberflächendichte der Folie (11) bei deren Biegung um die Transportwalzen (3, 4) aufweist.

2. Das endlose Transportband mit einem Werbeträger nach Anspruch 1,
**dadurch gekennzeichnet, daß**
die Fugen (31) bzw. Öffnungen (32) die Folie (11) auf die Bänder (34, 35) und/oder Reihen (36) aufteilen, wobei das Randband (34) und/oder das benachbarte Innenband (35) oder Reihe (36) abgerundete Außenplanecken (341, 342) bzw. (351, 352) haben.

3. Das endlose Transportband mit Werbeträger gemäß Anspruch 1,
**dadurch gekennzeichnet, daß**
die Fugen (31) bzw. die Öffnungen (32) die Folie (11) auf Bänder (34, 35) mit einer Breite w = 0, 5 [mm] - 0,5 π·d [mm] aufteilen, wobei d den Durchschnitt der Transportwalze (3, 4) bedeutet.

4. Das endlose Transportband mit dem Werbeträger gemäß Anspruch 3,
**dadurch gekennzeichnet, daß**
die Breite der Bänder (34, 35) 5-12 [mm] ist.

5. Werbeträger gemäß Anspruch 1,
**dadurch gekennzeichnet, daß**
die Tiefe der Fugen (31) bzw. der Öffnungen (32) der Folie (11) wenigstens einem Teil ihrer Dicke gleich ist.

6. Werbeträger gemäß Anspruch 5,
**dadurch gekennzeichnet, daß**
die Tiefe der Fugen (31) bzw. Öffnungen (32) der Folie (11) ihrer gesamten Dicke gleich ist.

7. Werbeträger gemäß Anspruch 2,
**dadurch gekennzeichnet, daß**
der Halbmesser der Abrundung der Außenquerecken (341, 342) des Randbandes (34) und der Außenquerecken (351, 352) des benachbarten Innenbandes (35) kleiner ist, als die Hälfte der Breite w der Bänder (34, 35).

8. Werbeträger gemäß Anspruch 1,
**dadurch gekennzeichnet, daß**
die Fugen (31) bzw. Öffnungen (32) quer zur Längsachse des flexiblen Bandes angeordnet sind (1).

9. Werbeträger gemäß Anspruch 1,
**dadurch gekennzeichnet, daß**
die Dicke des Werbeträgers (10) 0,05 ö 0,45 [mm] ist.

10. Der Werbeträger gemäß Anspruch 1,
**dadurch gekennzeichnet, daß**
die Folie (11) auf ihrer Außenseite (13) mit einer glasfaserverstärkten Oberflächenschutzschicht (24) versehen ist.

11. Werbeträger gemäß Anspruch 1,
**dadurch gekennzeichnet, daß**
die Folie (11) mehrschichtig ist.

12. Werbeträger gemäß Anspruch 1,
**dadurch gekennzeichnet, daß**
die Folie (11) zur Transportoberfläche (2) des Transportbandes (1) mittels selbstklebender Schicht (22) befestigt ist, die fest mit der Innenseite (12) der Folie (11) verbunden ist.

## Claims

1. Endless conveyor belt with an advertising carrier, particularly for cash and issuing desks and escalators in public places, laid in a rolling manner on conveyor rollers,
**characterized by**
the advertising carrier (10) consisting of a foil (11) made of elastic flexible material with its inner side (12) fixed to a flat convey surface (2) of a rubber conveyor belt (1) and on the outer side (13) provided with an advertising medium (23), the advertising carrier (10) exhibiting gutters (31) or holes (32) for compensation of changes in surface density of the foil (11) while bending around the conveyor rollers (3, 4).

2. Endless conveyor belt with advertising carrier according to claim 1,
**characterized by**
the gutters (31) or holes (32) dividing the foil (11) to stripes (34, 35) and/or lines (36), the outside stripe (34) and/or neighbouring inner stripe (35) or line (36) having the outer front edges (341, 342; 351, 352) rounded.

3. Endless conveyor belt with advertising carrier according to claim 1,
**characterized by**
the gutters (31) or holes (32) dividing the foil (11) to stripes (34, 35) of width of w = 0,5 [mm] - 0,5 . π . d [mm], where d is a diameter of the conveyor roller (3, 4).

4. Endless conveyor belt with advertising carrier according to claim 1,
**characterized by**
the width of the stripes (34, 35) being 5 - 12 [mm].

5. Advertising carrier according to claim 1,
**characterized by**
the depth of the gutters (31) or holes (32) in the foil (11) equalling at least to a part of its thickness.

6. Advertising carrier according to claim 5,
**characterized by**
the depth of the gutters (31) or holes (32) in the foil (11) equalling to its thickness.

7. Advertising carrier according to claim 2,
**characterized by**
the radius of rounding of the outer front edges (341, 342) of the lateral stripe (34) and the outer front edges (351, 352) of the neighbouring inner stripe (35) being smaller than half of the w-width of the stripes (34, 35).

8. Advertising carrier according to claim 1,
**characterized by**
the gutters (31) or holes (32) being arranged crosswise to the longitudinal axis of the rubber belt (1).

9. Advertising carrier according to claim 1,
**characterized by**
the thickness of the advertising carrier holder (10) being 0.05 ö 0.45 [mm].

10. Advertising carrier according to claim 1,
**characterized by**
the foil (11) being on its outer side (13) protected by a laminate protective layer (24).

11. Advertising carrier according to claim 1,
**characterized by**
the foil (11) consisting of several layers.

12. Advertising carrier according to claim 5,
**characterized by**
the foil (11) being fixed to the convey surface (2) of the conveyor belt (1) by a self adhesive layer (22) firmly connected to the inner side (12) of the foil (11).

## Revendications

1. Bande transporteuse sans fin avec un support de publicité prévu surtout pour les comptoirs de caisse et pour ceux de distribution des magasins et escalier mécanique des locaux publics, logée à roulement sur les rouleaux de transport,
**caractérisée par**
le support de publicité (10) comportant la feuille (11) en matériel souple et flexible, fixée du côté intérieur (12) à la surface plate de transport (2) de la bande transporteuse en caoutchouc et munie du côté extérieur (13) d'un média de publicité (23), le support de publicité (10) disposant des joints (31) ou des orifices (32) afin d'équilibrer les changements de densité superficielle de la feuille (11) lors de la flexion suite à l'action des rouleaux de transport (3, 4).

2. Bande transporteuse sans fin avec un support de publicité selon la revendication 1,
**caractérisée par**
les joints (31) ou les orifices (32) divisant la feuille (11) en rubans (34, 35) et/ou en lignes (36), le ruban extrême (34) et/ou celui voisin intérieur (35) ou la ligne (36) disposant des angles extérieurs frontaux (341,342) et de ceux (351,352) arrondis.

3. Bande transporteuse sans fin avec un support de publicité selon la revendication 1,
**caractérisée par**
les joints (31) ou les orifices (32) divisant la feuille (11) en bandes (34, 35) d'une largeur w = 0, 5 [mm] - 0,5 π d [mm], où d étant le diamètre du rouleau de transport (3, 4).

4. Bande transporteuse sans fin avec un support de publicité selon la revendication 3,
**caractérisée par**
la largeur des rubans (34, 35) étant de 5 - 12 [mm].

5. Le support de publicité selon la revendication 1,
**caractérisé par**
la profondeur des joints (31) ou des orifices (32) de la feuille (11) étant égale d'au moins à une part de l'épaisseur de celle-ci.

6. Le support de publicité selon la revendication 5,
**caractérisé par**
la profondeur des joints (31) ou des orifices (32) de la feuille (11) étant égale à son épaisseur totale.

7. Le support de publicité selon la revendication 2,
**caractérisé par**
le rayon d'arrondi des angles extérieurs frontaux (341, 342) du ruban extrême (34) et des angles extérieurs frontaux (351, 352) du ruban intérieur voisin (35) étant inférieur à la moitié de la largeur w des rubans (34, 35).

8. Le support de publicité selon la revendication 1,
**caractérisé par**
Les joints (31) ou les orifices (32) disposés en travers de l'axe longitudinal de la bande en caoutchouc (1).

9. Le support de publicité selon la revendication 1,
**caractérisé par**
l'épaisseur du support de publicité (10) étant de 0,05 ö0,45 [mm].

10. Le support de publicité selon la revendication 1,
**caractérisé par**
la feuille (11) étant du côté extérieur (13) munie d'une couche superficielle de protection en stratifié (24).

11. Le support de publicité selon la revendication 1,
**caractérisé par**
la feuille (11) étant multicouche.

12. Le support de publicité selon la revendication 1,
**caractérisé par**
la feuille (11) étant fixée à la surface de transport (2) de la bande transporteuse (1) moyennant une couche autocollante (22) liée d'une manière solide avec le côté intérieur (12) de la feuille (11).
